# EUROPEAN PATENT APPLICATION

(11) **EP 0 582 952 A1**
(43) Date of publication of application: **16.02.1994**
(21) Application number: 93112469.7
(22) Date of filing: 04.08.1993
(51) Int. Cl.: G02B 6/30, G02B 6/255, G02B 6/42

(54) **Perfection of the protection of an optical component for the interconnection of optical fibers**

(30) Priority: 13.08.1992 FR 9210008
(71) Applicant: Corning Incorporated, Corning New York 14831 (US)
(72) Inventor: Firtion, Eric Jean Henri, Corning, NY 14831 (US); Vial, Jacques Jean, Corning, NY 14831 (US)
(74) Representative: Aron, Georges

(57) **Abstract**

The invention relates to a process for encapsulating an optical component for the interconnection of optical fibers, in which the component is inserted into a protective envelope having at least one open side, a hardenable embedding product is applied to attach the component into the envelope and to close the open side(s) of the envelope, and the embedding product is then hardened, characterized in that the embedding product is a cross-linkable polymeric composition, which is non-flowing in the absence of shearing stresses, but which becomes flowing when submitted to shearing stress, and which presents, after cross-linking, a Shore A hardness of at least 30 and a water re-absorption at saturation point lower than 2 weight %, and also characterized in that the embedding product is submitted, while being applied, to shearing stresses likely to bring it into a flowing state.

## Description

### Background of the Invention

The invention relates to a perfection of the protection of an optical component for the interconnection of optical fibers.

FR-A-2 652 912 describes a process for encapsulating an optical component for the interconnection of optical fibers taking the form of a small bar connected with these fibers, characterized in that the bar is inserted along a direction transverse to its longitudinal axis into an elongated envelope with a U-shaped transverse cross-section substantially complementary to that of the bar, and a sealing product is deposited in the part of the envelope adjoining it open contour in order to fix the bar in the envelope, as well as an encapsulated component obtained by the implementation of this process, comprising a bar designed to be connected with optical fibers, characterized in that it comprises an elongated envelope with a U-shaped cross-section substantially complementary to that of the bar, this envelope having a length and a height suitable to insure the protection of the bar, and having a sealing product spread in the part of the envelope adjoining its open contour in order to insure the attachment of the bar in the envelope and the closing of the envelope.

According to the description in FR-A-2 652 912, the sealing product used to fix the bar-shaped optical component in the envelope, and to close the envelope, that is, to isolate the component from the outside, is a thermosetting resin, or a soldering product. As an example of a useful thermosetting resin, an epoxy resin commercially available from CIBA-GEIGY Corporation is indicated.

Although FR-A-2 652 912 provides for shaping the flanges of the envelope so as to prevent the flow of the sealing product due to capillary action into the junction areas between the fibers and the bar, it appeared with practice that, even so, rather frequently the sealing product mentioned above flowed into these junction areas, which resulted in having to discard the encapsulated component.

Furthermore, it also appeared that the encapsulated component resulting, even if not defective because of an inopportune flow of the embedding product, lacked rigidity, and was therefore easily damaged during handling.

The applicant has therefore undertaken intensive researches to find an embedding product which permits the prevention of defects due to an inopportune flow of the embedding product, and which also permits the rigidification of the encapsulated component.

The present invention is the outcome of this research and therefore aims to provide a improved embedding product for attaching an optical component interconnecting optical fibers into a protective element, and to isolate this component from the outside.

More particularly, the invention relates to a process for encapsulating an optical component for the interconnection of optical fibers, in which the component is inserted into a protective envelope having at least one open side, a hardenable embedding product is applied to attach the component into the envelope and to close the open side(s) of the envelope, and the embedding product is then hardened, characterized in that the embedding product is a cross-linkable, polymeric composition, which is non-flowing in the absence of shearing stresses, but which becomes flowing when submitted to shearing stress, and which presents, after cross-linking, a Shore A hardness of at least 30 and a water re-absorption at saturation point lower than 2 weight %, and also characterized in that the embedding product is submitted, while being applied, to shearing stresses calculated to bring it into a flowing state.

The process of the invention is particularly suitable for the production of encapsulated components in accordance with the one described in FR-A-2 652 912, whose design and process are incorporated herein by reference, but it is not limited to these components, as one understands easily. In fact, the process of the invention can be useful, in a general way, to embed an optical component for the interconnection of optical fibers into a protective envelope.

The embedding product used in the process of the invention is a cross-linkable polymeric composition, that is non-flowing in the absence of shearing stresses, but becomes flowing when submitted to a shearing stress. In other words, the polymeric composition must be a composition with a flow threshold, that is to say a composition with a non-Newtonian behavior, in particular, a thixotropic composition. These types of compositions are usually polymeric compositions containing a mineral filler.

The polymeric composition must have good mechanical properties to insure the strengthening or rigidification of the encapsulated optical component. To this end, we have found that the polymeric composition must exhibit a Shore A hardness of at least 30 after cross-linking. The polymeric composition must also exhibit a water re-absorption at saturation point, after cross-linking, not exceeding 2% in order to protect the encapsulated component from the effects of humidity. Finally, it must be possible to cross-link the cross-linkable polymeric composition at a relatively maximum temperature, lower than the maximal temperature of use of the optical component. It is estimated that 85°C represents the maximum cross-linking temperature that may be utilized, but a lower cross-linking temperature, such as 60°C or less, is preferred.

The cross-linkable polymeric composition can be of very diverse chemical nature. Suitable compositions are commercially available. For example, there are: thixotropic silicone resin, hardening at room temperature commercialized by RHONE-POULENC Corporation under the trade name "RTV 541"; the thixotropic polyurethane resin commercialized by CIBA-GEIGY Corporation under the trade name "XB 5093", alone or mixed with the non-thixotropic polyurethane resin "XB 5090" commercialized by the same corporation, this mixture containing from 60 to 100% in weight of thixotropic resin (both resin XB 5093 and XB 5090 are identical except for the filler); and a filled polyurethane resin commercialized by SAMI Corporation, Malesherbes, Loiret, France, which composition is not known, but which is prepared from polybutadiene-diol as a diol component.

The polymeric composition can be applied by any means which submits it to a shearing stress large enough to make it fluid. As non-limiting examples, the polymeric composition can be applied by hand with the aid of a piston syringe, or on a production line, with the aid of an automatic distribution machine exerting a shearing effect on the composition.

As soon as it is applied at the desired spot, the composition stops being submitted to a shearing stress, so that its viscosity increases, and it becomes non-flowing, which prevents any inopportune flow around the regions of the junctions between the optical fibers and the bar.

Finally, the applied composition is cross-linked to make it harden. Depending on the type of the composition, the cross-linking can be made at room temperature, for example, in the case of a bicomponent silicone composition or by a moderate heating, for example, in the case of polyurethane compositions.

The following non-limiting examples are given in order to illustrate the invention.

### Examples 1 to 3

Three types of hardenable thixotropic polymeric resins have been used to encapsulate a bar-shaped optical component into a protective envelope, the component and the envelope being such as described in FR-A-2 652 912.

Each of these resins has been applied with a syringe, and then has been hardened.

The properties of the resins as well as the hardening conditions are indicated in the following table.

| Example | Thixotropic Resin | Glass Transition Temperature Tg (°C) | Elongation at Rupture Point (%) | Hardening Conditions |
|---|---|---|---|---|
| 1 | RTV 541(1) | -114 | 200 | 16h at 20°C |
| 2 | SAMI Resin(2) | <-40° | 105 | 16h at 50°C |
| 3 | XB 5093+ XB 5090(3) | 45 | 7 | 2h at 60°C |

| | | | | |
|---|---|---|---|---|
| (1) Is a thixotropic filled silicone resin, that hardens at room temperature, commercialized under the trade name RTV 451 by RHONE-POULENC Corporation. | | | | |
| (2) Is a polybutadiene-diol based bicomponent filled polyurethane resin supplied by SAMI Corporation, Malesherbes, Loiret, France. | | | | |
| (3) Is a mixture of 80 weight % thixotropic filled poly-urethane resin commercialized under the trade name XB 5093 by CIBA-GEIGY Corporation and of 20 weight % non-thixotropic polyurethane resin commercialized under the trade name XB 5090 by CIBA-GEIGY Corporation. | | | | |

The resulting encapsulated components, as well as a bare optical component (without envelope or embedding product), used as reference, and a component encapsulated with XB 5090 only (non-thixotropic; for comparison purposes) have then been submitted to a test for resistance to temperature variations comprising making the temperature vary from -40 to 85°C during nine (9) hours, or to a heat and humidity resistance test comprising maintaining the components in an environment of 63°C and 98% relative humidity for five (5) days. After each test, the excursion level in dB has been determined, that is the maximum variation of the optical signal during the test, zero being the ideal value. The results of these tests are reported in the following table:

| Example | Excursion Level (in dB) | |
|---|---|---|
| | Thermal Cycle Test | Heat and Humidity Test |
| 1 | 0.07 | 0.15 |
| 2 | 0.06 | 0.18 |
| 3 | 0.06 | 0.17 |
| Comparison Component | 0.35 | 0.40 |
| Reference Component | 0.05 | 0.20 |

These results demonstrate clearly the superiority of the components that are encapsulated in accordance with the present invention. These components furthermore exhibit a very good mechanical resistance due to the fixing and strengthening action exerted by the embedding product.

Needless to say, the described embodiments are merely examples, they can be modified -- in particular by substituting technical equivalents -- without thereby departing from the scope of the invention.

## Claims

1. A process for encapsulating an optical component for the interconnection of optical fibers, in which the component is inserted into a protective envelope having at least one open side, a hardenable embedding product is applied to attach the component into the envelope and to close the open side(s) of the envelope, and the embedding product is then hardened, characterized in that the embedding product is a cross-linkable polymeric composition, which is non-flowing in the absence of shearing stresses, but which becomes flowing when submitted to shearing stress, and which presents, after cross-linking, a Shore A hardness of at least 30 and a water re-absorption at saturation point lower than 2 weight %, and also characterized in that the embedding product is submitted, while being applied, to shearing stresses calculated to bring it into a flowing state.

2. The process of claim 1, characterized in that the polymeric composition is cross-linked at a temperature not exceeding 85°C.

3. The process of claim 1, characterized in that the polymeric composition is applied with the aid of a piston syringe.
